# EUROPÄISCHE PATENTANMELDUNG

(11) **EP 1 122 269 A1**
(43) Veröffentlichungstag der Anmeldung: **08.08.2001**
(21) Anmeldenummer: 01101142.6
(22) Anmeldetag: 22.01.2001
(51) Int. Cl.: C08G 18/08, C08G 18/12, C08G 18/44, C08G 18/66, C09D 175/06

(54) **Wässrige Sperrschicht auf Basis von Polyurethan-Dispersionen**

(30) Priorität: 03.02.2000 DE 10004723
(71) Anmelder: BAYER AG, 51368 Leverkusen (DE)
(72) Erfinder: Blum, Harald, Dr., 51375 Leverkusen (DE); Meixner, Jürgen, Dr., 47803 Krefeld (DE); Müller, Heino, 51377 Leverkusen (DE); Petzoldt, Joachim, Dr., 40789 Monheim (DE)

(57) **Zusammenfassung**

Die Erfindung betrifft neue Polyurethan-Dispersionen, ein Verfahren zu deren Herstellung und deren Verwendung in wässrigen Bindemitteln für schnell trocknende Beschichtungen in der Automobillackierung.

## Beschreibung

Die Erfindung betrifft neue Polyurethan-Dispersionen, ein Verfahren zu deren Herstellung und deren Verwendung in wässrigen Bindemitteln für schnell trocknende Beschichtungen in der Automobillackierung.

In der Automobilserienlackierung hat sich ein mehrschichtiger Aufbau etabliert, der in zunehmendem Maße durch wässrige Beschichtungsmittel realisiert wird. Wässrige Beschichtungen zeigen aufgrund der speziellen Eigenschaften des Dispergier- bzw. Lösemittels Wasser häufig das Problem, dass zur Erzielung optimaler Beschichtungseigenschaften die Trocknung bei relativ hohen Temperaturen und/oder für relativ lange Zeiten erfolgen muss. Moderne Beschichtungen müssen jedoch zunehmend auch Forderungen bezüglich einer hohen Wirtschaftlichkeit erfüllen. Ein wesentliches Ziel ist z.B., den Beschichtungsaufbau in der Automobilerstlackierung in möglichst wenigen und möglichst kostengünstigen, das heißt vor allem schnell aufeinander abfolgenden Einzelschritten zu applizieren. Hohe Trocknungstemperaturen, lange Ablüftzeiten bzw. lange Trockenzeiten stehen dieser Anforderung entgegen.

Beim üblichen Lackaufbau in der Autoerstlackierung wird auf eine durch kathodische Elektrotauchlackierung (KTL) grundierte Metalloberfläche zunächst eine Steinschlagschutzschicht und eine Füllerschicht oder eine Kombination aus beiden ('Steinschlagschutzfüller') appliziert. Auf diese Schichten wird dann ein pigmentierter Basislack, anschließend ein Klarlack oder alternativ ein pigmentierter Decklack aufgebracht.

Die Steinschlagschutzfüllerschicht sorgt für einen Ausgleich von Unebenheiten der Oberfläche und bewirkt durch eine hohe Elastizität und Deformierbarkeit eine gute Beständigkeit gegen Steinschlag. Bislang werden für diese Schicht daher Polyester und Polyurethane sowie Polyisocyanat- oder Melaminvernetzer eingesetzt. Vor Applikation von Basislack und Klarlack bzw. Decklack wird der Steinschlagschutzfüller eingebrannt. Dies ist notwendig, um den Decklackstand zu verbessern und eventuell noch vorhandene Fehlstellen in der Füllerschicht abzuschließen. Nach Aufbringen des Klarlacks bzw. Decklacks wird dann erneut eingebrannt. Nachteilig an diesem Verfahren ist, dass zwei aufwendige Einbrennvorgänge notwendig sind. Physikalisch, d. h. ohne Einbrennvorgang, schnell trocknende Lacke, wie sie zum Beispiel aus Polyacrylaten formuliert werden können, weisen nicht die geforderte Steinschlagfestigkeit auf, da sie beim Aushärten zu Filmen mit unzureichendem filmmechanischen Eigenschaftsniveau führen.

Aufgabe der vorliegenden Erfindung war, ein Bindemittel für eine Sperrschicht mit Steinschlagschutzfunktion zur Verfügung zu stellen, das neben einer guten Steinschlagfestigkeit vor allem eine sehr schnelle physikalische Trocknung gewährleistet und wobei die nach der schnellen physikalischen Trocknung erhaltene Beschichtung eine sehr gute Wasserbeständigkeit aufweist und gegen Anlösen durch den anschließend applizierten Basis- bzw. Decklack resistent ist. Darüber hinaus muss auch die Haftung bzw. Zwischenschichthaftung ausgezeichnet sein, um einen optimalen Lackaufbau zu gewährleisten. Daneben muss das Bindemittel lichtecht sein, um auch im Fall mäßig deckender Deck- oder Basislacke oder an Stellen, an denen ganz auf einen pigmentierten Deck- oder Basislack verzichtet wird, eine bewitterungsstabile Beschichtung zu erzeugen. Ebenfalls gefordert ist eine hervorragende Stabilität, insbesondere Viskositätsstabilität entsprechend formulierter Lacke und eine praxisgerechte Reparaturfähigkeit für notwendige Reparaturen direkt an der Linie.

Ein Lösungsvorschlag für steinschlagfeste Überzüge und/ oder Füllerschichten auf Basis wässriger Bindemittel wird z. B. in der EP-A-0 330 139 beschrieben. Die beanspruchten Dispersionen säurefunktioneller Polyester sind bekanntermaßen nur eingeschränkt lagerstabil, da sie einem raschen chemischen Abbau durch Spaltung von Esterbindungen unterliegen (z. B. Jones, T.E.; McCarthy, J.M. , J. Coatings Technol. **76** (844), S. 57 (1995)).

In der EP-A-0 498 156 werden urethangruppenhaltige Polyester-Dispersionen beschrieben, die sehr gut zur Herstellung von Steinschlagschutz-Zwischengrundierungen bzw. von Einbrennfüllern mit hoher Steinschlagfestigkeit geeignet sind. Um dieses hohe Eigenschaftsniveau zu erreichen sind jedoch hohe Aushärtetemperaturen bzw. lange Einbrennzeiten erforderlich.

DE-A-3 936 794 beschreibt carbonatgruppenhaltige Polyurethan-Dispersionen und deren Verwendung in der Automobillackierung z.B. für Basislacke, und zwar sowohl unter Einbrennbedingungen bei ca. 140°C, als auch im Reparaturfall an der Linie bei ca. 80°C. Wichtige Anforderungen, die diese Dispersionen erfüllen müssen, sind z.B. Haftung, Witterungsbeständigkeit und Schwitzwasserbeständigkeit auch bei 80°C-Trocknung.

DE-A-4 438 504 beschreibt Lackschichtformulierungen auf Basis von wasserverdünnbaren Polyurethanharzen eines mittleren Molekulargewichtes Mn von 4000 bis 25000 g/Mol, mit denen möglichst dünne Lackfilme für Füller- und Steinschlagzwischengrundschichten hergestellt werden können.

Es besteht jedoch nach wie vor Bedarf nach weiter verbesserten Produkten, die in der
Lage sind, die ständig steigenden Anforderungen abzudecken und vielfältige Anwendungen ermöglichen. Dabei wird insbesondere eine sehr schnelle physikalische Trocknung, eine schnell erreichbare, sehr gute Wasserfestigkeit und ein sehr hohes Härte-Elastizitätsniveau gefordert, was mit den Produkten nach dem Stand der Technik nicht immer erreicht werden kann.

Überraschenderweise wurde nun gefunden, dass spezielle hochmolekulare, lösemittelfreie, einen relativ hohen Gehalt an Carboxylatgruppen und isolierte Harnstoffgruppen aufweisende Polyurethan-Dispersionen von Umsetzungsprodukten aus mindestens einer Polyolkomponente, mindestens einer, mindestens dihydroxyfunktionellen niedermolekularen Verbindung, mindestens einer hydrophilierenden Komponente und mindestens einem mindestens difunktionellen Isocyanat besonders gut geeignet sind, die an eine Sperrschicht mit Steinschlagschutzfunktion gestellten Anforderungen zu erfüllen. Dabei wurde auch gefunden, dass sich solche Produkte nach einem sehr einfachen, und damit insbesondere kostengünstigen Verfahren, bestehend aus einer einstufig durchgeführten, schnell ablaufenden Urethanisierungsreaktion, Dispergierung, Kettenverlängerungsreaktion und anschließender Lösemitteldestillation herstellen lassen. Damit ist es möglich, hochwertige, umweltfreundliche Produkte kostengünstig herzustellen.

Gegenstand der Erfindung sind also wässrige Polyurethan-Dispersionen aus Umsetzungsprodukten von
A) mindestens einem, mindestens difunktionellen Polyol des Molekulargewichtsbereiches 500-6000,
B) mindestens einem, mindestens difunktionellen niedermolekularen Alkohol,
C) mindestens einem, di- und/oder trifunktionellen Isocyanat und
D) mindestens einer Verbindung mit einer Säuregruppe und ein oder zwei Hydroxy- und/oder primären bzw. sekundären Aminogruppen in solch einer Menge, die eine Säurezahl bezogen auf Feststoffgehalt von < 25 mg KOH/g Substanz gewährleistet, wobei die gesamte Neutralisationsmittelmenge vor der Kettenverlängerungsreaktion zugesetzt wird,
   wobei der Neutralisationsgrad mindestens 40, höchstens jedoch 105 % bezogen auf die Menge an Säuregruppen beträgt,
   wobei entweder in den Ausgangskomponenten der Polyole A) oder in der niedermolekularen Komponente B) tri- oder höherfunktionelle Bestandteile in einer Menge von mindestens 1 Gew.-%, bezogen auf die Gesamtfeststoffmenge an A) bis D), enthalten sind und
   wobei ein Gehalt an isolierten Harnstoffgruppen (in der Klammer von Formel I) von 1 bis 4 Gew.-% enthalten ist.

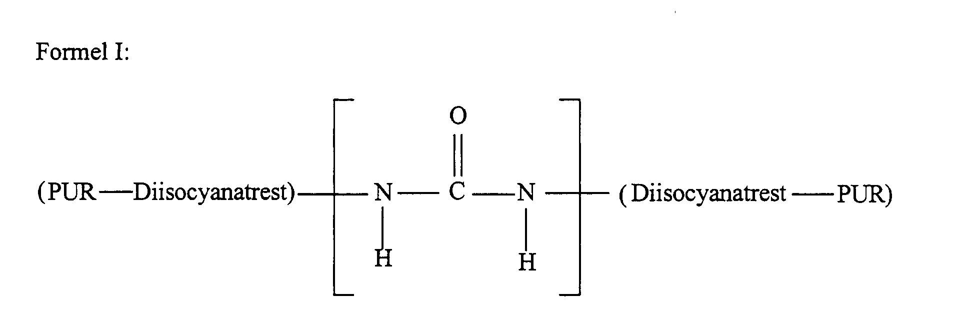

Gegenstand der Erfindung ist auch ein Verfahren zur Herstellung der erfindungsgemäßen Polyurethan-Dispersionen, dadurch gekennzeichnet, dass aus den genannten Komponenten A), B), C), und D) in organischer Lösung zunächst ein NCO- und säurefunktionelles Polyurethan-Prepolymer hergestellt, anschließend für mindestens 40, höchstens jedoch 105 % der Säuregruppen Neutralisationsmittel zugegeben und das so erhaltene Prepolymer in oder mit Wasser dispergiert wird, dann gegebenenfalls Neutralisationsmittel bis zu der maximalen Menge des Neutralisationsgrades von 105 % nachgesetzt und solange bei 25 bis 75 °C gerührt wird, bis die unter NCO-Wasser-Reaktion ablaufende Kettenverlängerung abgeschlossen ist, wobei während oder nach der Dispergierung bzw. während oder nach der Kettenverlängerungsreaktion das organische Lösemittel bis auf eine Menge < 5% entfernt wird.

Bevorzugt geht man dabei so vor, dass zu den genannten Komponenten A), B) und D) für mindestens 40, höchstens jedoch 105 % der Säuregruppen Neutralisationsmittel zugegeben wird und dann mit Komponente C) in organischer Lösung ein NCO- und säurefunktionelles Polyurethan-Prepolymer hergestellt wird und das so erhaltene Prepolymer in oder mit Wasser dispergiert wird, dann gegebenenfalls Neutralisationsmittel bis zu der maximalen Menge des Neutralisationsgrades von 105 % nachgesetzt und solange bei 25 bis 75°C gerührt wird, bis die unter NCO-Wasser-Reaktion ablaufende Kettenverlängerung abgeschlossen ist, wobei während oder nach der Dispergierung bzw. während oder nach der Kettenverlängerungsreaktion das organische Lösemittel bis auf eine Menge < 5% entfernt wird.

Gegenstand der Erfindung ist auch die Verwendung der erfindungsgemäßen Polyurethan-Dispersionen in Lacken und Beschichtungen.

Geeignete Komponenten A) sind mindestens difunktionelle Polyester, Polyether, Polyetherpolyamine, Polycarbonate, Polyesteramide des Molekularbereiches 500-6000. Dies können sein Dihydroxypolyester aus Dicarbonsäuren bzw. deren Anhydriden, z.B. Adipinsäure, Bernsteinsäure, Phthalsäureanhydrid, Isophthalsäure, Terephthalsäure, Korksäure, Azelainsäure, Sebaceinsäure, Tetrahydrophthalsäure, Maleinsäureanhydrid, Dimerfettsäuren und Diolen, z. B. Ethylenglykol, Propylenglykol, 1,3-Propandiol, Diethylenglykol, Triethylenglykol, Butandiol-1,4, Hexandiol-1,6, Trimethylpentandiol, Cyclohexandiol-1,4, Cyclohexandimethanol-1,4, Neopentylglykol, Octandiol-1,8. Es können auch Polyester mitverwendet werden, die gewisse Mengen mono-, tri- oder tetrafunktioneller Rohstoffe, wie z.B. 2-Ethylhexansäure, Benzoesäure, Sojaölfettsäure, Ölsäure, Stearinfettsäure, Sonnenblumenölfettsäure, Trimellithsäureanhydrid, Trimethylolpropan, Glycerin, Pentaerythrit enthalten.

Ebenfalls verwendet werden können Polyester auf Lacton-, insbesondere ε-Caprolactonbasis, Polycarbonate, wie sie durch Umsetzung beispielsweise der oben genannten Diole mit Diaryl- oder Dialkylcarbonaten oder Phosgen zugänglich sind, sowie Rizinusöl. Geeignet sind ebenfalls Polyether, wie sie z.B. unter Verwendung von Diolen, Triolen, Wasser oder Aminen als Startermolekül durch Polymerisation von Propylenoxid und/oder Tetrahydrofuran, ggf. unter Mitverwendung geringer Mengen Ethylenoxid und/oder Styroloxid erhalten werden könne.

Vorzugsweise eingesetzte Komponenten A) sind difunktionelle Polyester des Molekulargewichtes 840 bis 2600 auf Basis aliphatischer Rohstoffe wie z.B. Adipinsäure, Maleinsäureanhydrid, Hexandiol, Neopentylglykol, Ethylenglykol, Propylenglykol, Diethylenglykol, insbesondere aliphatische Polyesterdiole des Molekulargewichtes 1700 bis 2100 auf Basis Adipinsäure, Hexandiol und Neopentylglykol.

Vorzugsweise eingesetzte Komponenten A) sind ebenfalls aliphatische Polycarbonatdiole bzw. Polyestercarbonatdiole des Molekulargewichtes 840 bis 2600.

Ganz besonders bevorzugt besteht die Gesamtmenge an Komponente A) aus einer Mischung von 20 bis 80 Gew.-% eines aliphatischen Polyesterdiols des Molekulargewichtes 840 bis 2100 und von 80 bis 20 Gew.-% eines aliphatischen Polycarbonatdiols bzw. Polyestercarbonatdiols des Molekulargewichtes 1000 bis 2100.

Überraschenderweise wurde gefunden, dass solch eine Mischung z.B. besonders gute Eigenschaften in Bezug auf schnelle Trocknung der Dispersion, verbunden mit sehr guter Wasserfestigkeit und hohem Steinschlagschutzniveau der Sperrschicht ergibt. Bei alleiniger Verwendung von Polyesterdiolen ist für eine gute Wasserfestigkeit und
Hydrolysestabilität die Auswahl spezieller Polyesterdiole z.B. auf Basis von Adipinsäure, Hexandiol, Neopentylglykol des Molekulargewichtsbereiches 1700 bis 2100 vorteilhaft. Die alleinige Verwendung von Polycarbonatdiolen kann zu Problemen in der Filmoptik z.B. durch nicht optimalen Verlauf und unter ungünstigen Umständen auch zu nicht optimaler Zwischenschichthaftung führen, die dann die Ausarbeitung spezieller Rezepturen notwendig macht.

Geeignete niedermolekulare Komponenten B) können sein z. B. Ethylenglykol, 1,4-Butandiol, 1,6-Hexandiol, Neopentylglykol, Trimethylolpropan, Glycerin, Pentaerythrit, Trimethylpentandiol, Propylenglykol, 1,3-Propandiol, 1,4-Cyclohexadimethanol, bzw. deren Umsetzungsprodukte mit Ethylen- und/oder Propylenoxid. Das Molekulargewicht von B) kann zwischen 62 und 400 liegen.

Vorzugsweise wird als Komponente B) ein tri- oder höherfunktioneller niedermolekularer Alkohol wie Trimethylolpropan, Glycerin, Pentaerythrit, bzw. deren Umsetzungsprodukte mit 1 bis 6 Mol Ethylen- und/oder Propylenoxid verwendet.

Ganz besonders bevorzugt ist die Verwendung trifunktioneller Alkohole wie Trimethylolpropan bzw. Glycerin in einer Menge von 0,5 bis 4,0, vorzugsweise von 1,0 bis 3,0 Gew.-%.

Geeignete Komponenten C) können sein di- und/oder trifunktionelle aliphatische Isocyanate wie z. B. Hexamethylendiisocyanat, Butandiisocyanat, Isophorondiisocyanat, 1-Methyl-2,4 (2,6)-diisocyanatocyclohexan, Norbornandiisocyanat, Xylylendiisocyanat, Tetramethylxylylendiisocyanat, Hexahydroxylylendiisocyanat, Nonantriisocyanat, 4,4'- Diisocyanatodicyclohexylmethan. Ebenfalls geeignet ist die Mitverwendung aromatischer Isocyanate wie z.B. 2,4(2,6)-Diisocyanatotoluol oder 4,4'-Diisocyanatodiphenylmethan sowie höhermolekulare bzw. oligomere Polyisocyanate des Molekulargewichtsbereiches 336 bis 1500 auf Basis der oben genannten aliphatischen Isocyanate.

Vorzugsweise werden 4,4'-Diisocyanatodicyclohexylmethan und/oder Isophorondiisocyanat und/oder Hexamethylendiisocyanat und/oder 1-Methyl-2,4(2,6)-diisocyanatocyclohexan eingesetzt.

Ganz besonders bevorzugt ist die Verwendung von Isophorondiisocyanat und/oder Hexamethylendiisocyanat oder von Mischungen aus 4,4'-Diisocyanatodicyclohexylmethan mit Isophorondiisocyanat oder Hexamethylendiisocyanat.

Die ganz besonders bevorzugten Komponenten C) ermöglichen die Herstellung besonders hochwertiger Polyurethandispersionen für Sperrschichten mit ausgezeichnetem Steinschlagschutzniveau und insgesamt überzeugendem Eigenschaftsniveau.

Die Komponente D) besteht aus mindestens einer (potentiell) ionischen Verbindung mit mindestens einer Säuregruppe und mindestens einer gegenüber Isocyanatgruppen reaktionsfähigen Hydroxyl- und/oder Aminogruppe.

Vorzugsweise handelt es sich bei diesen Verbindungen um mindestens eine, vorzugsweise eine oder zwei Hydroxyl- und/oder Aminogruppen aufweisende Carbonsäure. Geeignete derartige Säuren sind beispielsweise 2,2-Bis(hydroxymethyl)alkancarbonsäure wie Dimethylolessigsäure, 2,2-Dimethylolpropionsäure, 2,2-Dimethylbuttersäure oder 2,2-Dimethylol-pentansäure, Dihydroxybernsteinsäure, Hydroxypivalinsäure oder um Gemische derartiger Säuren. Vorzugsweise wird als Komponente D) Dimethylolpropionsäure und/oder Hydroxypivalinsäure verwendet. Ebenfalls möglich, jedoch weniger bevorzugt, ist die Verwendung von gegebenenfalls Ethergruppen aufweisenden Sulfonsäurediolen der in US-A-4 108 814 beschriebenen Art als anionische Aufbaukomponente D). Die freien Säuregruppen stellen die vorstehend genannten "potentiell ionischen" Gruppen dar, während es sich bei den durch Neutralisation mit Neutralisationsmitteln erhaltenen salzartigen Gruppen, insbesondere Carboxylatgruppen, um "ionischen" Gruppen handelt.

Komponente D) wird in solchen Mengen eingesetzt, dass die Säurezahl bezogen auf Feststoffgehalt der Dispersion bei < 25, vorzugsweise bei < 20 mg/KOH g Substanz liegt.

Überraschenderweise wurde gefunden, das trotz der relativ hohen Säurezahl bzw. des daraus resultierenden hohen Gehaltes an Salzgruppen, z.B. Carboxylatgruppen, Dispersionen erhalten werden, die die Herstellung von Sperrschichten mit sehr schnell erreichter, früher Wasserfestigkeit ermöglichen. Trotz des hohen Salzgruppengehaltes und des hohen Molekulargewichtes der erfindungsgemäßen Dispersionen ist es überraschenderweise möglich, Lacke für Sperrschichten mit außerordentlich hohem mechanischen, z.B. Härte-Elastizitätsniveau und exzellentem Steinschlagschutzniveau zu formulieren, die bei Applikationsviskosität einen Festkörpergehalt von 50 Gew.-% oder mehr aufweisen.

Zusätzlich zu den Aufbaukomponenten A), B), C), D) kann gegebenenfalls in geringem Umfang, in Mengen < 4 Gew.-%, auch eine Komponente E) bei der Herstellung der Polyurethan-Dispersionen mitverwendet werden. Komponenten E) können nichtionisch-hydrophile Polyether sein, die pro Molekül eine oder zwei gegenüber Isocyanatgruppen reaktionsfähige Gruppen, insbesondere Hydroxylgruppen aufweisen und bevorzugt ein Molekulargewicht Mn von 350 bis 2500 haben.

Die erfindungsgemäßen wässrigen Polyurethan-Dispersionen enthalten vorzugsweise Umsetzungsprodukte von
A) 50 bis 80 Gew.-% mindestens eines, mindestens difunktionellen aliphatischen Polyols auf Polyester-, Polyestercarbonat- und/oder Polycarbonatbasis des Molekulargewichtes 840 bis 2600,
B) 0,5 bis 4 Gew.-% mindestens eines, mindestens difunktionellen, niedermolekularen Alkohols mit Molekulargewicht 62 bis 400,
C) 18 bis 38 Gew.-% mindestens eines di-und/oder trifunktionellen Isocyanates,
D) 2,5 bis 6 Gew.-% Dimethylolpropionsäure und/oder Dimethylolbuttersäure und/oder Hydroxypivalinsäure sowie
E) weniger als 4 Gew.-% nichtionisch-hydrophile, monofunktionelle Polyether mit Molekulargewichten von 350 bis 2500,
wobei die gesamte Neutralisationsmittelmenge vor der Kettenverlängerungsreaktion zugesetzt wird,
wobei der Neutralisationsgrad mindestens 40, höchstens jedoch 105 % bezogen auf die Menge, an Säuregruppen beträgt,
wobei entweder in den Ausgangskomponenten der Polyole A) oder in der niedermolekularen Komponente B) tri- oder höherfunktionelle Bestandteile in einer Menge von mindestens 1 Gew.-%, bezogen auf die Gesamtfeststoffmenge an A) bis D), enthalten sind und
wobei ein Gehalt an isolierten Harnstoffgruppen (in der Klammer von Formel I) von 1 bis 4 Gew.-% enthalten ist.

Besonders bevorzugte erfindungsgemäße wässrige Polyurethan-Dispersionen enthalten Umsetzungsprodukte aus
A) 55 bis 75 Gew.-% einer Mischung von 20 bis 80 Gew.-% eines aliphatischen Polyesterdiols des Molekulargewichtes 840 bis 2100 und von 80 bis 20 Gew.-% eines aliphatischen Polycarbonatdiols bzw. Polyestercarbonatdiols des Molekulargewichtes 1000 bis 2100,
B) 1 bis 3 Gew.-% eines trifunktionellen, niedermolekularen Alkohols, insbesondere Trimethylolpropan oder Glycerin,
C) 20 bis 35 Gew.-% Isophorondiisocyanat und/oder Hexamethylendiisocyanat und/oder einer Mischung aus 4,4'-Diisocyanatodicyclohexylmethan mit Isophorondiisocyanat oder Hexamethylendiisocyanat,
D) 3,5 bis 4,9 Gew.-% Dimethylolpropionsäure.

Die Umsetzung der hydroxyfunktionellen Komponenten A), B), D) und ggf. E) mit der isocyanatfunktionellen Komponente C) erfolgt in an sich bekannter Art und Weise ein- oder mehrstufig, wobei die Mengenverhältnisse der Reaktionspartner so gewählt werden, dass das Äquivalentverhältnis von NCO:OH-Gruppen bei 2,5:1 bis 1,2:1, vorzugsweise bei 1,7:1 bis 1,4:1 liegt. Die Reaktion kann unter Zusatz geringer Mengen Katalysatoren wie z.B. Dibutylzinndilaurat, Zinn-2-oktoat, Dibutylzinnoxid oder Diazabicyclononan durchgeführt werden.

Zur Vermeidung von Viskositäts-, Rühr-, Misch- und Wärmeabfuhrproblemen wird die Reaktion in 35 bis 97 %-iger organischer Lösung, besonders bevorzugt in 55 bis 75 %-iger acetonischer Lösung durchgeführt.

Vor dem Dispergieren des organisch gelösten, NCO-funktionellen Polyurethanprepolymeres oder auch schon vor der Umsetzung der Komponenten A), B), D) und ggf. E) mit der isocyanatfunktionellen Komponente C) wird für mindestens 40, vorzugsweise mindestens 50 %, höchstens jedoch 105 % der Säuregruppen Neutralisationsmittel zugesetzt.

Es ist auch möglich, das Neutralisationsmittel dem Dispergierwasser zuzugeben.

Bevorzugte Neutralisationsmittel sind z. B. Triethylamin, N-Methylmorpholin, Dimethylisopropylamin, Ethyldiisopropylamin, ebenfalls geeignet sein können, z.B. Diisopropylaminoethanol, Dimethylethanolamin, Dimethylisopropanolamin. Es können auch Mischungen verschiedener Neutralisationsmittel eingesetzt werden. Ammoniak ist als Neutralisationsmittel ebenfalls in einigen Fällen geeignet.

Besonders bevorzugt ist Ethyldiisopropylamin, gegebenenfalls in Mischung mit anderen Aminen.

Nach dem Dispergieren des Polyurethanprepolymeres in/durch Wasser wird solange gerührt, bis sämtliche NCO-Gruppen durch NCO-Wasserreaktion unter Kettenverlängerung über isolierte Hamstoffstruktureinheiten abreagiert haben. Dabei kann gegebenenfalls weiteres Neutralisationsmittel nachgegeben werden, wobei der Neutralisationsgrad bezogen auf eingebaute Säuregruppen höchstens 105 % beträgt.

Die zur Herstellung des Polyurethanprepolymeres eingesetzten Lösemittel können teilweise bzw. vorzugsweise ganz aus der Dispersion durch Destillation abgetrennt werden. Vorzugsweise enthalten erfindungsgemäße Dispersionen weniger als 5 Gew.-%, besonders bevorzugt praktisch kein organisches Lösemittel.

Die Destillation erfolgt so, dass kein eingesetztes Neutralisationsmittel mit abdestilliert wird, sollte dies durch ungünstig gewählte Destillationsbedingungen doch der Fall sein, so wird die entsprechende Menge Neutralisationsmittel der Dispersion anschließend wieder zugesetzt.

Bei der Kettenverlängerung des NCO-funktionellen Polyurethanprepolymeres in Wasser können gegebenenfalls für bis zu 40 % der vorhandenen NCO-Gruppen mono-, di- oder trifunktionelle Kettenverlängerungs- bzw. Kettenabbruchmittel der bekannten Art, die gegebenenfalls auch ionische Gruppen, Säuregruppen oder Hydroxylgruppen enthalten können, zugesetzt werden. Vorzugsweise wird jedoch ausschließlich eine Kettenverlängerung über die NCO-Wasserreaktion durchgeführt.

Die erfindungsgemäßen Dispersionen haben einen (rechnerisch ermittelbaren und auf 100 % Feststoffgehalt bezogenen) Gehalt an isolierten Harnstoffstruktureinheiten folgender Art (Formel in eckiger Klammer): 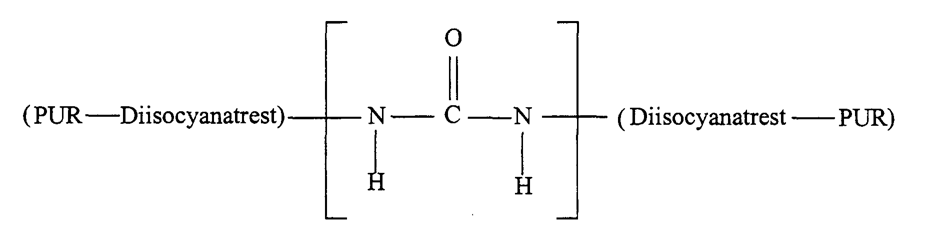 von 1,0 bis 4,0 %, vorzugsweise von 1,75 bis 3,25 %.

Die Berechnung erfolgt unter der Annahme, dass die Hälfte der NCO-Gruppen des Polyurethanprepolymeren mit Wasser unter CO₂-Abspaltung zu Aminogruppen abreagieren, welche dann mit der 2. Hälfte der NCO-Gruppen unter Bildung von isoliert stehenden Monoharnstoffbrücken unter Molekulargewichtserhöhung reagieren.

Die erfindungsgemäßen Dispersionen weisen Teilchendurchmesser, bestimmt z. B. durch Laserkorrelationsspektroskopie-Messungen, von 20 bis 600, vorzugsweise von 50 bis 150 nm auf. Der Festkörpergehalt der Dispersionen beträgt mindestens 30, vorzugsweise mindestens 35 %. Der pH-Wert der Dispersion liegt unter 8,5, vorzugsweise unter 7,8. Die mittleren Molekulargewichte Mn der Dispersion liegen bei >20000, vorzugsweise >30000 und ganz besonders bevorzugt >40000 g/Mol (bestimmt z. B. durch Gelpermeationschromatographie). In einer speziellen Ausführungsform sind in der Dispersion anteilig sehr hochmolekulare, nicht mehr vollständig in organischen Lösemitteln lösliche Anteile enthalten, die sich dann einer Molekulargewichtsbestimmung entziehen.

Die erfindungsgemäßen Produkte sind zur Beschichtung bzw. Lackierung beliebiger Substrate, insbesondere Holz, Keramik, Stein, Beton, Bitumen, Hartfaser, Glas, Porzellan, Kunststoffen und metallische Untergründe der verschiedensten Art geeignet. Weiterhin sind sie einsetzbar als Finish oder Appretur bei der Textil- und Lederbeschichtung.

Bevorzugtes Einsatzgebiet ist die Fahrzeugerstlackierung, insbesondere als Sperrschicht mit hohem Steinschlagschutzniveau und ausgezeichneter Wasserfestigkeit.

Zur erfindungsgemäßen Verwendung der erfindungsgemäßen Dispersionen können diesen die üblichen Hilfs- und Zusatzmittel zugesetzt werden. Hierzu gehören beispielsweise anorganische oder organische Pigmente, Füllstoffe wie beispielsweise Ruß, Kieselsäure, Talkum, Kreide, Kieselerde, Kaolin, Glas als Pulver oder in Form von Fasern, Cellulose oder Celluloseacetobutyrat, sowie Vernetzungsmittel wie blockierte Polyisocyanate, Polyisocyanate, Melaminharze, Harnstoffharze, Harnstoff-Aldehydharze, Carbodiimide, Carbamate, Tris(alkoxycarbonylamino)triazine, carbamatmodifizierte Aminovernetzerharze. Die Vernetzungsmittel können in wasserdispergierbarer oder in nicht wasserdispergierbarer Form eingesetzt werden.

Beispiele für den blockierten Polyisocyanaten zugrunde liegende geeignete Polyisocyanate sind cycloaliphatische oder aliphatische Polyisocyanate wie Hexamethylendiisocyanat (HDI), 1-Isocyanato-3,3,5-trimethyl-5-isocyanatomethylcyclohexan (Isophorondiisocyanat, IPDI), Methylen-bis-(4-isocyanatocyclohexan), Tetramethylxylylendiisocyanat (TMXDI). Bevorzugt geeignet sind Polyisocyanate, die Heteroatome in dem die Isocyanatgruppen enthaltenden Rest enthalten. Beispiele hierfür sind Carbodiimidgruppen, Allophanatgruppen, Isocyanuratgruppen, Urethangruppen und Biuretgruppen aufweisende Polyisocyanate. Besonders gut für die Erfindung geeignet sind die bekannten Polyisocyanate, die hauptsächlich bei der Herstellung von Lacken eingesetzt werden, z. B. Biuret-, Isocyanurat- oder Uretdiongruppen aufweisende Modifizierungsprodukte der oben genannten einfachen Polyisocyanate, insbesondere des Hexamethylendiisocyanats oder des Isophorondiisocyanats. Auch geeignet sind niedermolekulare, Urethangruppen enthaltende Polyisocyanate, wie sie durch Umsetzung von im Überschuss eingesetztem IPDI oder TDI mit einfachen mehrwertigen Alkoholen des Molekulargewichtsbereiches 62 - 300, insbesondere mit Trimethylolpropan oder Glycerin, erhalten werden können. Es können auch beliebige Gemische der genannten Polyisocyanate zur Herstellung der erfindungsgemäßen Produkte eingesetzt werden. Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanaten reaktionsfähigen funktionellen Gruppen zugänglich sind.

Die Isocyanatgruppen der Polyisocyanate sind blockiert. Als Blockierungsmittel können übliche Verbindungen verwendet werden, wie sie beispielsweise auf dem Lacksektor eingesetzt werden. Beispiele für geeignete Blockierungsmittel sind Malonsäuredimethylester, Malonsäurediethylester, Acetessigsäureethylester, Caprolactam, sekundäre aliphatische Amin, Butanonoxim, 3,5-Dimethylpyrazol.

Die beschriebenen blockierten Polyisocyanate können in nicht hydrophiler Form eingesetzt werden, wobei die Überführung in die wässrige Dispersion z.B. durch Vermischen und gemeinsames Dispergieren mit dem Polyurethanprepolymer bewerkstelligt werden kann. Es kann jedoch auch die erfindungsgemäße Polyurethandispersion als polymerer Emulgator für alleine nicht wasserdispergierbare Vernetzungsmittel verwendet werden. Es ist auch möglich, der erfindungsgemäßen Polyurethan-dispersion ein hydrophiliertes, wasserdispergierbares oder bereits in wasserdispergierbarer Form vorliegendes blockierten Polyisocyanats zuzufügen. Hydrophilierte blockierte Polyisocyanate sind bekannt und z. B. beschrieben in EP-A-0 566 953.

Vorzugsweise werden als Vernetzungsmittel reaktive Aminovernetzerharze bzw. Melaminharze wie z.B. Cymel® 328 (Cytec), oder /und Trisalkoxycarbonylaminotriazine wie z.B. TACT® (Cytec) oder/und reaktive, z.B. malonesterblockierte Polyisocyanatvernetzer und/oder urethanisierte Melaminharze eingesetzt.

Die erfindungsgemäßen Polyurethandispersionen können mit weiteren Bindemitteln kombiniert werden. Bevorzugt ist die Kombination mit wasserlöslichen oder wasserunlöslichen Melaminharzen sowie wasseremulgierbaren oder wasserdispergierbaren Polyesterharzen oder Polyester-Polyurethanharzen.

Die Verarbeitung der Dispersion zur Herstellung von Überzügen nach beliebigen Methoden, beispielsweise durch Streichen, Gießen, Sprühen, Tauchen, Walzen oder Rakeln, erfolgen.

Die erfindungsgemäßen Dispersionen sind z.B. geeignet zur Herstellung von Lacken, Beschichtungen, Dichtstoffen und Klebmassen.

Die Trocknung der nach verschiedenen Applikationstechniken erhaltenen Produkte kann bei Raumtemperatur oder bei erhöhter Temperatur bis 200°C, vorzugsweise bei 60-150 °C erfolgen.

Bei der bevorzugten, erfindungsgemäßen Verwendung als physikalisch sehr schnell bei niedrigen Temperaturen trocknende Beschichtung in der Fahrzeugerstlackierung als Sperrschicht mit hohem Steinschlagschutzniveau erfolgt die Applikation vorzugsweise durch Spritzen und die Trocknung vorzugsweise für 5 bis 10 Minuten bei 50 bis 80°C.

Die Trockenfilm-Schichtdicke kann beispielsweise bei 15 - 50 µm liegen, es sind jedoch Beschichtungen mit höherer Schichtstärke möglich. Die Beschichtung kann hochelastisch, aber, je nach Anforderungsprofil, auch hart eingestellt werden. Nach der Trocknung ist die Sperrschicht schleifbar und sehr gut überlackierbar. Nach dem Überlackieren mit einem Basislack/ Klarlack bzw. einem pigmentierten Decklack erfolgt dann ein gemeinsamer Einbrennvorgang, z. B. für 20 - 25 Minuten bei 120 - 160°C.

Die so erzeugte Beschichtung weist optisch wie mechanisch vergleichbare bzw. bessere Resultate auf wie ein Lackaufbau, bei dem anstatt der Sperrschicht ein wie üblich eingesetzter Füller mit z. B. 35 - 45 µm Trockenfilm-Schichtdicke mit einem eigenen Einbrennvorgang von z. B. 20 - 25 Minuten bei 135 - 165°C und zusätzlich Basislack/ Klarlack oder aber Decklack aufgetragen werden.

Die erfindungsgemäßen Dispersionen können mit anderen ionischen oder nichtionischen Dispersionen oder wässrigen Lösungen gemischt werden, z. B. mit Polyester- Polyvinylacetat-, Polyethylen-, Polystyrol-, Polybutadien-, Polyurethan- Polyvinylchlorid-, Polyester-Polyacrylat-, Polyacrylat- und Copolymerisat-Dispersionen oder Lösungen. Auch der Zusatz von an sich bekannten, chemisch nicht fixierten, vorzugsweise ionischen Emulgatoren ist möglich.

Bevorzugt ist die Mitverwendung von wasserlöslichen bzw. wasserdispergierbaren Polyestern, Polyester-Polyurethanen, Polyester-Polyacrylaten sowie von anderen Polyurethandispersionen, insbesondere von Polyurethan-Dispersionen mit schneller phsikalischer Trocknung und hohen Hartsegmentgehalten.

Erfindungsgemäße Lacke für Sperrschichten enthalten neben in der Automobilerstlackierung üblichen Additiven und Hilfsmitteln und gegebenenfalls Wasser zum Einstellen der Spritzviskosität
a) 30 bis 90, vorzugsweise 45 bis 75 Gew.-% erfindungsgemäße Polyurethandispersion,
b) 0 bis 20, vorzugsweise 1 bis 10 Gew.-% Vernetzungsmittel,
c) 5 bis 70, vorzugsweise 10 bis 44 Gew.-% Pigmente und/oder Füllstoffe,
d) 0 bis 65, vorzugsweise 10 bis 44 Gew.-% sonstige Bindemittel, vorzugsweise wässrige Polyester- bzw. Polyester-Polyurethan-Lösungen bzw. -Dispersionen.

Die erfindungsgemäßen Lacke für Sperrschichten weisen Festkörpergehalte von mindestens 45, vorzugsweise mindestens 50 % bei Applikationsviskosität auf und zeigen auch bei Anwesenheit hochreaktiver Vernetzungsmittel für Einbrennlacke, z.B. auf Melaminharzbasis, eine sehr gute Viskositätsstabilität bei Lagerung.

Gleichzeitig weisen die aus den erfindungsgemäßen Dispersionen bereiteten Sperrschichten eine hervorragende Steinschlagbeständigkeit sowie eine sehr gute Haftung bzw. Zwischenschichthaftung auf.

Die erfindungsgemäßen Polyurethan-Dispersionen können auch zur Herstellung reaktiver, bei niedrigen Temperaturen aushärtbaren Einbrennlacken, insbesondere Einbrennfüllern eingesetzt werden. Dabei werden sie vorzugsweise mit den oben genannten reaktiven Vernetzerharzen und gegebenenfalls anderen Polymeren so kombiniert, das gegebenenfalls unter Mitverwendung geeigneter Katalysatoren sowie der üblichen Pigmente, Additive und Hilfsmittel bei 90 bis 120°C aushärtbare Beschichtungen erhalten werden.

### Folgende Beispiele sollen die Erfindung erläutern:

### Beispiel 1 (erfindungsgemäß):

In ein trockenes 2-1-Reaktionsgefäß mit Rühr-, Kühl- und Heizvorrichtung werden 144 g eines aliphatischen Polycarbonatdiols (Desmophen® 2020, Bayer AG, Molgewicht 2000), 108 g eines Polyesterdiols auf Basis Adipinsäure, Hexandiol, Neopentylglykol (Molgewicht 2000) und 17,6 g Dimethylolpropionsäure unter Stickstoffatmosphäre eingewogen und auf 65°C aufgeheizt. Dann werden 6,0 g Trimethylolpropan, 200 g Aceton, 59,5 Isophorondiisocyanat und 39,0 g Hexamethylendiisocyanat zugegeben und auf Rückflusstemperatur erhitzt. Es wird solange erhitzt, bis der theoretische NCO-Wert erreicht bzw. leicht unterfahren ist. Nach abkühlen auf 60°C werden 10,0 g Triethylamin (Neutralisationsgrad, d.h. % -Anteil der in die Salzform überführten Carboxylgruppen, ist 75 %) und anschließend 550 g destilliertes Wasser zugegeben. Es wird solange bei 40 bis 50°C gerührt, bis keine freien NCO-Gruppen mehr nachweisbar sind. Anschließend wird das Aceton destillativ entfernt. Man erhält eine ca. 40%ige feinteilige Dispersion 1) mit einem pH-Wert von 7,3 und einer Viskosität von ca. 200 mPas/23°C.

### Beispiel 2) (Vergleich):

Urethangruppen enthaltende Polyesterdispersion gemäß EP-A-0 498 156, Beispiel 2), ca. 41 % Feststoffgehalt. Viskosität ca. 1000 mPas/23°C.

### Anwendungsbeispiel 3) (erfindungsgemäß):

Herstellung einer Sperrschicht:

Aus 117 g einer Pigmentpaste ^{A)}, 182 g der Dispersion 1), 9,8 g Aminovernetzerharz (Cymel® 328, Cytec) und 10 g destilliertem Wasser wird ein Lack für eine Sperrschicht 3) hergestellt. Der Lack hat einen pH-Wert von 7,6, einen Feststoffgehalt von 52 % und eine Auslaufzeit im ISO 5 Becher von 21 Sekunden. Nach 14 Tagen Lagerung des Lackes bei Raumtemperatur ist die Viskosität nur geringfügig angestiegen (24 Sekunden).
A) Die Pigmentpaste wird aus folgenden Rohstoffen durch Anreiben auf einer Perlmühle hergestellt: 42,2 g Bayhydrol® D270 (Wasserdispergierbares Polyesterharz, 70 %ig in organischen Lösemitteln gelöst, Bayer), 82,4 g destilliertes Wasser, 6 g einer 10 %igen wässrigen Lösung von Dimethylethanolamin, 5,4 einer 50 %igen Lösung von Surfynol® 104 ( Benetzungshilfsmittel, Air Products) in NMP, 5,4 g Additol® XW 395 (Vianova Resins), 108,2 g Bayertitan® R-FD-I (Titandioxid, Bayer), 1,2 g Bayferrox® 303T (Eisenoxid, Bayer), 108,9 g Blanc fixe® micro (Sachtleben), 26,6 g Talkum® IT extra (Norwegian Talk) und 3,7 g Aerosil® R 972 (Degussa).

Es wird folgender Lackaufbau auf mit einer kathodischen Tauchlackierung (KTL) versehen Blechen appliziert und wie angegeben ausgehärtet:
a) Sperrschicht 3), 20 µm Trockenfilmstärke, 10 Minuten 70°C Antrocknung,
b) Handelsüblicher Basislack, schwarz, 15 µm Trockenfilmstärke, 10 Minuten bei 80°C Antrocknung,
c) Handelsüblicher medium solids Klarlack, 40 µm Trockenfilmstärke, 25 Minuten 145°C Einbrennen.

### Folgende Prüfergebnisse wurden anschließend erhalten:

### Aussehen der Beschichtung nach Applikation: In Ordnung

Zwischenhaftung Sperrschicht-Decklack (Noten von 1 bis 3, 1 ist sehr gut, 3 ist schlecht): 1

Zwischenhaftung Sperrschicht-KTL (Noten von 1 bis 3, 1 ist sehr gut, 3 ist schlecht): 1

Steinschlagfestigkeit (Noten von 1 bis 10, 1 ist sehr gut, 10 ist sehr schlecht): 1

Prüfung im Reparaturfall, d.h. im Lackaufbau werden Basislack und Klarlack nochmals wie oben beschrieben appliziert und gehärtet (d.h. auf dem Blech befinden sich dann insgesamt 6 Lackschichten übereinander):

Abplatzer vom Füller (Noten von 1 bis 7, 1 ist sehr gut, 7 ist sehr schlecht):1

Steinschlagfestigkeit (Noten von 1 bis 10, 1 ist sehr gut, 10 sehr schlecht): 1

Zur Überprüfung der Wasserfestigkeit der Sperrschicht wird ein Film mit 20 µm Trockenfilmstärke appliziert und für 10 Minuten bei 70°C angetrocknet. Dann wird die Empfindlichkeit gegen Wasserquellung gemessen (Noten 0 bis 5, 0 bedeutet keine Einwirkung, 5 bedeutet Film aufgelöst): 1

Zur Prüfung der Filmhärte und der Anlösbarkeit wird ein Film mit 20 µm Trockenfilmstärke appliziert, 5 Minuten bei 80°C abgelüftet und 22 Minuten bei 145°C eingebrannt:

Filmhärte: 58 Pendelsekunden (nach König)
Lösemittelfestigkeit (Prüfung Anlösbarkeit bei einer Minute Belastung mit folgenden Lösemitteln: Toluol, Methoxypropylacetat, Ethylacetat, Aceton, Bewertung 0 bis 5, 0 ist unverändert, 5 ist abgelöst): 2/2/2/2

Dispersion 1) erfüllt alle Anforderungen, die an eine Sperrschicht gestellt werden.

### Anwendungsbeispiel 4) (Vergleich):

Wie in Beispiel 3) beschrieben, wird unter Verwendung von Vergleichsdispersion 2) anstelle der Dispersion 1) ein Lack für eine Sperrschicht hergestellt, entsprechende Beschichtungen appliziert und ausgehärtet, sowie die Eigenschaften geprüft.

Folgende Prüfergebnisse wurden erhalten:
Lackfestkörper: 51 %, pH-Wert 7,5

Aussehen der Beschichtung nach der Applikation: Nicht in Ordnung, Base coat haftet nicht optimal auf der Sperrschicht, er platzt auf.

Eine Haftungs bzw. Steinschlagschutzprüfung im Lackaufbau ist nicht möglich.

Überprüfung der Wasserfestigkeit der Sperrschicht nach 10 Minuten Trocknung bei 70°C Trocknung: 5

Filmhärte: 14 Pendelsekunden (nach König)

Lösemittelfestigkeit: 4/3/4/4

Das Vergleichsprodukt ist als Sperrschicht ungeeignet, außerdem sind Lösemittelfestigkeit und vor allem die Filmhärte und die Wasserfestigkeit unzureichend.

### Beispiel 5) (Vergleich):

In ein trockenes 2-1-Reaktionsgefaß mit Rühr-, Kühl- und Heizvorrichtung werden 144 g eines aliphatischen Polycarbonatdiols (Desmophen® 2020, Bayer AG, Molgewicht 2000), 108 g eines Polyesterdiols auf Basis Adipinsäure, Hexandiol, Neopentylglykol (Molgewicht 2000) und 17,6 g Dimethylolpropionsäure unter Stickstoffatmosphäre eingewogen und auf 65°C aufgeheizt. Dann werden 6,0 g Trimethylolpropan, 200 g Aceton, 59,5 Isophorondiisocyanat und 39,0 g Hexamethylendiisocyanat zugegeben und auf Rückflusstemperatur erhitzt. Es wird solange erhitzt, bis der theoretische NCO-Wert erreicht bzw. leicht unterschritten ist. Nach abkühlen auf 60°C werden in 5 Minuten 5,8 g Ethylendiamin, verdünnt mit 30 g Wasser zugegeben, was einem Kettenverlängerungsgrad von ca. 60 % entspricht (d.h. für ca. 60 % der noch verbleibenden NCO-Gruppen werden reaktive Aminogruppen in Form eines Diamins zugegeben), nach 15 Minuten Rühren werden 10,0 g Triethylamin (Neutralisationsgrad 75 %) und anschließend 5500 g destilliertes Wasser zugegeben. Es wird solange bei 40 bis 50°C gerührt, bis keine freien NCO-Gruppen mehr nachweisbar sind. Anschließend wird das Aceton destillativ entfernt. Nach Zugabe von weiterem destillierten Wasser zur Viskositätsreduzierung erhält man eine ca. 32 %ige feinteilige Dispersion 5) mit einem pH-Wert von 7,8 und einer Viskosität von ca. 1100 mPas/23°C.

### Anwendungsbeispiel 6 (Vergleich):

Wie in Beispiel 3) beschrieben, wird unter Verwendung von Vergleichsdispersion 5) anstelle der Dispersion 1) ein Lack für eine Sperrschicht hergestellt, entsprechende Beschichtungen appliziert und ausgehärtet, sowie die Eigenschaften geprüft.

Folgende Prüfergebnisse wurden erhalten:

Lackfestkörper: 42 %, pH-Wert Lack 8,1

Aussehen der Beschichtung nach der Applikation: Nicht in Ordnung, Blasen im Klarlack.

Der Lackfestkörper ist deutlich zu niedrig, die Verwendung als Sperrschicht führt zu nicht akzeptablen Ergebnissen.

### Beispiel 7 (Vergleich):

Carbonatgruppenhaltige Polyurethandispersion gemäß DE-A-3 936 794, Beispiel A), ca. 40 % Feststoffgehalt. Viskosität ca. 50 mPas/23°C.

### Anwendungsbeispiel 8) (Vergleich):

Wie in Beispiel 3) beschrieben, wird unter Verwendung von Vergleichsdispersion 7) anstelle der Dispersion 1) ein Lack für eine Sperrschicht hergestellt, entsprechende Beschichtungen appliziert und ausgehärtet, sowie die Eigenschaften geprüft.

Folgende Prüfergebnisse wurden erhalten:
Lackfestkörper: 52 %, pH-Wert 7,5
Aussehen der Beschichtung nach der Applikation: eingeschränkt in Ordnung. (Aufplatzen des Basislackes nach der Trocknung für 5 Minuten bei 80°C).
Überprüfung der Wasserfestigkeit der Sperrschicht nach 10 Minuten Trocknung bei
70°C Trocknung: 5
Filmhärte: 34 Pendelsekunden
Lösemittelfestigkeit: 2/3/3/4
Das Vergleichsbeispiel ist als Sperrschicht ungeeignet, da kein homogener Lackaufbau erzielt wird, und die Filmhärte, aber vor allem die Wasserfestigkeit unzureichend ist.

### Beispiel 9 (erfindungsgemäß):

In ein trockenes 2-1-Reaktionsgefäß mit Rühr-, Kühl- und Heizvorrichtung werden 420 g eines Polyesterdiols auf Basis Adipinsäure, Hexandiol, Neopentylglykol (Molgewicht 2000) und 29,2 g Dimethylolpropionsäure unter Stickstoffatmosphäre eingewogen und auf 65°C aufgeheizt. Dann werden 10,0 g Trimethylolpropan, 210 g Aceton, 114,9 Isophorondiisocyanat und 52,9 g Hexamethylendiisocyanat zugegeben und auf Rückflusstemperatur erhitzt. Es wird solange erhitzt, bis der theoretische NCO-Wert erreicht bzw. leicht unterfahren ist. Nach Abkühlen auf 45°C werden 20,6 g Ethyldiisopropylamin (Neutralisationsgrad 80 %) und anschließend 970 g destilliertes Wasser zugegeben. Es wird solange bei 40 bis 50°C gerührt, bis keine freien NCO-Gruppen mehr nachweisbar sind. Anschließend wird das Aceton destillativ entfernt. Man erhält eine ca. 39 %ige feinteilige Dispersion 9) mit einem pH-Wert von 7,3 und einer Viskosität von ca. 800 mPas/23°C.

### Anwendungsbeispiel 10) (erfindungsgemäß):

Herstellung einer Sperrschicht:
Aus 117 g einer Pigmentpaste ^{A)}, 195 g der Dispersion 9), 9,8 g Aminovernetzerharz (® Cymel 328, Cytec) und 8 g destilliertem Wasser wird ein Lack für eine Sperrschicht 10) hergestellt. Der Lack hat einen pH-Wert von 7,5, einen Feststoffgehalt von 50,3 % und eine Auslaufzeit im ISO 5 Becher von 21 Sekunden. Nach 14 Tagen Lagerung des Lackes bei Raumtemperatur ist die Viskosität nur geringfügig angestiegen (27 Sekunden).

### Folgende Prüfergebnisse im Lackaufbau wurden erhalten:

Aussehen der Beschichtung nach Applikation: In Ordnung
Zwischenhaftung Sperrschicht-Decklack (Noten von 1 bis 3, 1 ist sehr gut, 3 ist schlecht): 1
Zwischenhaftung Sperrschicht-KTL (Noten von 1 bis 3, 1 ist sehr gut, 3 ist schlecht):1
Steinschlagfestigkeit (Noten von 1 bis 10, 1 ist sehr gut, 10 ist sehr schlecht): 1

Prüfung im Reparaturfall:
Abplatzer vom Füller (Noten von 1 bis 7, 1 ist sehr gut, 7 ist sehr schlecht):1
Steinschlagfestigkeit (Noten von 1 bis 10, 1 ist sehr gut, 10 sehr schlecht): 1

Wasserfestigkeit der Sperrschicht: 1

Zur Prüfung der Filmhärte und der Anlösbarkeit wird ein Film mit 20 µm Trockenfilmstärke appliziert, 5 Minuten bei 80°C abgelüftet und 22 Minuten bei 145°C eingebrannt:
Filmhärte: 48 Pendelsekunden (nach König)
Lösemittelfestigkeit (Prüfung Anlösbarkeit bei einer Minute Belastung mit X/Y/Z/W, Bewertung 0 bis 5, 0 ist unverändert, 5 ist abgelöst): 1/1/2/3
Dispersion 9) erfüllt alle Anforderungen.

### Beispiel 11 (erfindungsgemäß):

In ein trockenes 2-1-Reaktionsgefaß mit Rühr-, Kühl- und Heizvorrichtung werden 160 g eines aliphatischen Polycarbonatdiols (Desmophen® 2020, Bayer AG, Molgewicht 2000), 120 g eines Polyesterdiols auf Basis Adipinsäure, Hexandiol, Neopentylglykol (Molgewicht 2000) und 19,6 g Dimethylolpropionsäure unter Stickstoffatmosphäre eingewogen. Dann werden 6,70 g Trimethylolpropan, 225 g Aceton und 10,4 g Ethyldiisopropylamin (Neutralisationsgrad 55 %) zugegeben und auf 65°C aufgeheizt. Nach Zugabe von 66,2 g Isophorondiisocyanat und 43,3 g Hexamethylendiisocyanat wird auf Rückflusstemperatur erhitzt. Es wird solange erhitzt, bis der theoretische NCO-Wert erreicht bzw. leicht unterfahren ist. Nach Abkühlen auf 60°C werden 625 g destilliertes Wasser zugegeben. Es wird solange bei 40 bis 50°C gerührt, bis keine freien NCO-Gruppen mehr nachweisbar sind. Anschließend wird das Aceton destillativ entfernt. Man erhält eine ca. 40 %ige feinteilige Dispersion 11) mit einem pH-Wert von 7,7 und einer Viskosität von ca. 500 mPas/23°C.

### Anwendungsbeispiel 12) (erfindungsgemäß):

Herstellung einer Sperrschicht:
Aus 117 g einer Pigmentpaste ^{A)}, 195 g der Dispersion 11), 9,8 g Aminovernetzerharz (® Cymel 328, Cytec) und 8 g destilliertem Wasser wird ein Lack für eine Sperrschicht 12) hergestellt. Der Lack hat einen pH-Wert von 7,4, einen Feststoffgehalt von 50,5 % und eine Auslaufzeit im ISO 5 Becher von 16 Sekunden. Nach 14 Tagen Lagerung des Lackes bei Raumtemperatur ist die Viskosität nur geringfügig angestiegen (18 Sekunden).

### Folgende Prüfergebnisse im Lackaufbau wurden erhalten:

Aussehen der Beschichtung nach Applikation: In Ordnung
Zwischenhaftung Sperrschicht-Decklack (Noten von 1 bis 3, 1 ist sehr gut, 3 ist schlecht): 1
Zwischenhaftung Sperrschicht-KTL (Noten von 1 bis 3, 1 ist sehr gut, 3 ist schlecht):1
Steinschlagfestigkeit (Noten von 1 bis 10, 1 ist sehr gut, 10 ist sehr schlecht): 1

Prüfung im Reparaturfall:
Abplatzer vom Füller (Noten von 1 bis 7, 1 ist sehr gut, 7 ist sehr schlecht):1
Steinschlagfestigkeit (Noten von 1 bis 10, 1 ist sehr gut, 10 sehr schlecht): 1

### Wasserfestigkeit der Sperrschicht: 1

Zur Prüfung der Filmhärte und der Anlösbarkeit wird ein Film mit 20 µm Trockenfilmstärke appliziert, 5 Minuten bei 80°C abgelüftet und 22 Minuten bei 145°C eingebrannt:

Filmhärte: 53 Pendelsekunden (nach König)

Lösemittelfestigkeit (Prüfung Anlösbarkeit bei einer Minute Belastung mit X/Y/Z/W,

Bewertung 0 bis 5, 0 ist unverändert, 5 ist abgelöst): 2/2/2/2

Dispersion 11) erfüllt alle Anforderungen.

### Beispiel 13 (erfindungsgemäß):

In ein trockenes 2-1-Reaktionsgefäß mit Rühr-, Kühl- und Heizvorrichtung werden 272 g eines aliphatischen Polycarbonatdiols (Desmophen® 2020, Bayer AG, Molgewicht 2000), 272 g eines Polyesterdiols auf Basis Adipinsäure, Hexandiol, Neopentylglykol (Molgewicht 1700) und 26,8 g Dimethylolpropionsäure unter Stickstoffatmosphäre eingewogen und auf 65°C aufgeheizt. Dann werden 11,3 g Trimethylolpropan, 250 g Aceton, 106,6 Isophorondiisocyanat und 75,9 g Hexamethylendiisocyanat und 0,025% Dibutylzinndilaurat zugegeben und auf Rückflusstemperatur erhitzt. Es wird solange erhitzt, bis der theoretische NCO-Wert erreicht bzw. leicht unterfahren ist. Nach abkühlen auf 45°C werden 17,2 g Triethylamin (Neutralisationsgrad 85 %) und anschließend 1250 g destilliertes Wasser zugegeben. Es wird solange bei 40 bis 50°C gerührt, bis keine freien NCO-Gruppen mehr nachweisbar sind. Anschließend wird das Aceton destillativ entfernt. Man erhält eine ca. 38 %ige sehr feinteilige Dispersion 13) mit einem pH-Wert von 7,7 und einer Viskosität von ca. 7500 mPas/23°C.

### Anwendungsbeispiel 14) (erfindungsgemäß):

Herstellung einer Sperrschicht:
Aus 117 g einer Pigmentpaste ^{A)}, 209 g der Dispersion 13), 9,8 g Aminovernetzerharz (Cymel® 328, Cytec) und 8 g destilliertem Wasser wird ein Lack für eine Sperrschicht 10) hergestellt. Der Lack hat einen pH-Wert von 7,5, einen Feststoffgehalt von ca. 49 % und eine Auslaufzeit im ISO 5 Becher von 15 Sekunden. Nach 14 Tagen Lagerung des Lackes bei Raumtemperatur ist die Viskosität nur geringfügig angestiegen (17 Sekunden).

### Folgende Prüfergebnisse im Lackaufbau wurden erhalten:

### Aussehen der Beschichtung nach Applikation: In Ordnung

Zwischenhaftung Sperrschicht-Decklack (Noten von 1 bis 3, 1 ist sehr gut, 3 ist schlecht): 1

Zwischenhaftung Sperrschicht-KTL (Noten von 1 bis 3, 1 ist sehr gut, 3 ist schlecht):1

Steinschlagfestigkeit (Noten von 1 bis 10, 1 ist sehr gut, 10 ist sehr schlecht): 1

Prüfung im Reparaturfall:
Abplatzer vom Füller (Noten von 1 bis 7, 1 ist sehr gut, 7 ist sehr schlecht):1

Steinschlagfestigkeit (Noten von 1 bis 10, 1 ist sehr gut, 10 sehr schlecht): 1

Wasserfestigkeit der Sperrschicht: 1

Zur Prüfung der Filmhärte und der Anlösbarkeit wird ein Film mit 20 µm Trockenfilmstärke appliziert, 5 Minuten bei 80°C abgelüftet und 22 Minuten bei 145°C eingebrannt:

Filmhärte: 41 Pendelsekunden (nach König)

Lösemittelfestigkeit: 2/2/2/3

Dispersion 13) erfüllt alle Anforderungen, allerdings ist durch den verringerten Gehalt an Dimethylolpropionsäure die Filmhärte im unteren Bereich der akzeptablen Werte.

## Patentansprüche

1. Wässrige Polyurethan-Dispersion enthaltend Umsetzungsprodukte von
A) mindestens einem, mindestens difunktionellen Polyol des Molekulargewichtsbereiches 500-6000,
B) mindestens einem, mindestens difunktionellen niedermolekularen Alkohol,
C) mindestens einem, di- und/oder trifunktionellen Isocyanat und
D) mindestens einer Verbindung mit einer Säuregruppe und ein oder zwei Hydroxy- und/oder primären bzw. sekundären Aminogruppen in solch einer Menge, die eine Säurezahl bezogen auf Feststoffgehalt von < 25 mg KOH/g Substanz gewährleistet,
wobei die gesamte Neutralisationsmittelmenge vor der Kettenverlängerungsreaktion zugesetzt wird,
wobei der Neutralisationsgrad mindestens 40, höchstens jedoch 105 % bezogen auf die Menge an Säuregruppen beträgt,
wobei entweder in den Ausgangskomponenten der Polyole A) oder in der niedermolekularen Komponente B) tri- oder höherfunktionelle Bestandteile in einer Menge von mindestens 1 Gew.-%, bezogen auf die Gesamtfeststoffmenge an A) bis D), enthalten sind und
wobei ein Gehalt an isolierten Harnstoffgruppen (in der Klammer von Formel I) 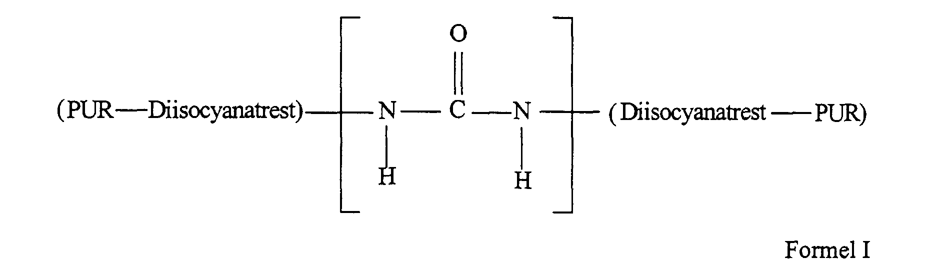 von 1 bis 4 Gew.-% enthalten ist.

2. Wässrige Polyurethan-Dispersion gemäß Anspruch 1 enthaltend Umsetzungsprodukte von
A) 50 bis 79 Gew.-% mindestens eines, mindestens difunktionellen aliphatischen Polyols auf Polyester-, Polyestercarbonat- und/oder Polycarbonatbasis des Molekulargewichtes 840 bis 2600,
B) 0,5 bis 4 Gew.-% mindestens eines, mindestens difunktionellen, niedermolekularen Alkohols mit Molekulargewicht 62 bis 400,
C) 18 bis 38 Gew.-% mindestens eines di-und/oder trifunktionellen Isocyanates,
D) 2,5 bis 6 Gew.-% Dimethylolpropionsäure und/oder Dimethylolbuttersäure und/oder Hydroxypivalinsäure sowie
E) weniger als 4 Gew.-% nichtionisch-hydrophile, monofunktionelle Polyether mit Molekulargewichten von 350 bis 2500,
wobei die gesamte Neutralisationsmittelmenge vor der Kettenverlängerungsreaktion zugesetzt wird,
wobei der Neutralisationsgrad mindestens 40, höchstens jedoch 105 % bezogen auf die Menge an Säuregruppen beträgt,
wobei entweder in den Ausgangskomponenten der Polyole A) oder in der niedermolekularen Komponente B) tri- oder höherfunktionelle Bestandteile in einer Menge von mindestens 1 Gew.-%, bezogen auf die Gesamtfeststoffmenge an A) bis D), enthalten sind und
wobei ein Gehalt an isolierten Harnstoffgruppen (in der Klammer von Formel I) 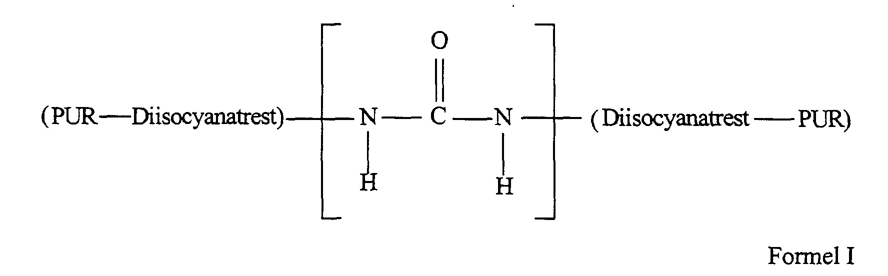 von 1 bis 4 Gew.-% enthalten ist.

3. Wässrige Polyurethan-Dispersion gemäß den Ansprüchen 1 und 2 enthaltend Umsetzungsprodukte von
A) 55 bis 75 Gew.-% einer Mischung von 20 bis 80 Gew.-% eines aliphatischen Polyesterdiols des Molekulargewichtes 840 bis 2100 und von 80 bis 20 Gew.-% eines aliphatischen Polycarbonatdiols bzw. Polyestercarbonatdiols des Molekulargewichtes 1000 bis 2100,
B) 1 bis 3 Gew.-% eines trifunktionellen, niedermolekularen Alkohols,
C) 20 bis 35 Gew.-% Isophorondiisocyanat und/oder Hexamethylendiisocyanat und/oder einer Mischung aus 4,4'-Diisocyanatodicyclohexylmethan mit Isophorondiisocyanat oder Hexamethylendiisocyanat, sowie
D) 3,5 bis 4,9 Gew.-% Dimethylolpropionsäure.

4. Wässrige Polyurethan-Dispersion gemäß den Ansprüchen 1 und 2 enthaltend Umsetzungsprodukte von
A) 55 bis 75 Gew.-% eines aliphatischen Polyesterdiols auf Basis Adipinsäure, Hexandiol, Neopentylglykol des Molekulargewichtes 1700 bis 2100,
B) 1 bis 3 Gew.-% eines trifunktionellen, niedermolekularen Alkohols,
C) 20 bis 35 Gew.-% Isophorondiisocyanat und/oder Hexamethylendiisocyanat und/oder einer Mischung aus 4,4'-Diisocyanatodicyclohexylmethan mit Isophorondiisocyanat oder Hexamethylendiisocyanat, sowie
D) 3,5 bis 4,9 Gew.-% Dimethylolpropionsäure.

5. Wässrige Polyurethan-Dispersion gemäß den Ansprüchen 1 bis 4, dadurch gekennzeichnet, dass trifunktionelle Rohstoffe ausschließlich in Komponente B) enthalten sind.

6. Wässrige Polyurethan-Dispersion gemäß den Ansprüchen 1 bis 5, dadurch gekennzeichnet, dass das mittlere Molekulargewicht des Polyurethans Mn >30000 g/Mol beträgt

7. Wässrige Polyurethan-Dispersion gemäß den Ansprüchen 1 bis 5, dadurch gekennzeichnet, dass sie lösemittelfrei sind, die Säurezahl (bezogen auf Feststoff) < 20 mg KOH/g Substanz und das Molekulargewicht Mn >30000 g/Mol beträgt.

8. Verfahren zur Herstellung der Polyurethan-Dispersionen gemäß den Ansprüchen 1 bis 7, dadurch gekennzeichnet, dass aus den genannten Komponenten A), B), C), und D) in organischer Lösung zunächst ein NCO- und säurefunktionelles Polyurethanprepolymer hergestellt, anschließend für mindestens 40, höchstens jedoch 105 % der Säuregruppen Neutralisationsmittel zugegeben und das so erhaltene Prepolymer in bzw. durch Wasser dispergiert wird, dann gegebenenfalls Neutralisationsmittel bis zu der maximalen Menge des Neutralisationsgrades von 105 % nachgesetzt und solange bei 25 bis 75°C gerührt wird, bis die unter NCO-Wasser-Reaktion ablaufende Kettenverlängerung abgeschlossen ist, wobei während oder nach der Dispergierung bzw. während oder nach der Kettenverlängerungsreaktion das organische Lösemittel bis auf eine Menge < 5 % entfernt wird.

9. Verfahren zur Herstellung der Polyurethan-Dispersionen gemäß den Ansprüchen 1 bis 7, dadurch gekennzeichnet, dass zu den genannten Komponenten A), B) und D) für mindestens 40, höchstens jedoch 105 % der Säuregruppen Neutralisationsmittel zugegeben und mit Komponente C) in organischer Lösung ein NCO- und säurefunktionelles Polyurethanprepolymer hergestellt wird, und das so erhaltene Prepolymer in bzw. durch Wasser dispergiert wird, dann gegebenenfalls Neutralisationsmittel bis zu der maximalen Menge des Neutralisationsgrades von 105 % nachgesetzt und solange bei 25 bis 75°C gerührt wird, bis die unter NCO-Wasser-Reaktion ablaufende Kettenverlängerung abgeschlossen ist, wobei während oder nach der Dispergierung bzw. während oder nach der Kettenverlängerungsreaktion das organische Lösemittel bis auf eine Menge < 5 % entfernt wird.

10. Lacke für Sperrschichten, dadurch gekennzeichnet, dass sie neben in der Automobilerstlackierung üblichen Additiven und Hilfsmitteln und gegebenenfalls Wasser zum Einstellen der Spritzviskosität
a) 30 bis 90 Gew.-% Polyurethan-Dispersion gemäß Anspruch 1),
b) 0 bis 20 Gew.-% Vernetzungsmittel,
c) 5 bis 70 Gew.-% Pigmente und/oder Füllstoffe,
d) 0 bis 65 Gew.-% sonstige Bindemittel.
enthalten.

11. Lacke für Sperrschichten gemäß Anspruch 10, dadurch gekennzeichnet, dass sie neben in der Automobilerstlackierung üblichen Additiven und Hilfsmitteln und gegebenenfalls Wasser zum Einstellen der Spritzviskosität
a) 45 bis 75 Gew.-% Polyurethan-Dispersion gemäß Anspruch 1),
b) 1 bis 10 Gew.-% Vernetzungsmittel,
c) 10 bis 44 Gew.-% Pigmente und/oder Füllstoffe,
d) 10 bis 44 Gew.-% wässrige Polyester- bzw. Polyester-Polyurethan-Lösungen bzw. -Dispersionen
enthalten.

12. Lacke für Sperrschichten gemäß den Ansprüchen 10 und 11, dadurch gekennzeichnet, dass als Vernetzungsmittel reaktive Melaminharze und/oder reaktive blockierte Polyisocyanate und/oder Trisalkoxycarbonylaminotriazine enthalten sind.

13. Lacke für Sperrschichten gemäß den Ansprüchen 10 bis 12, dadurch gekennzeichnet, dass sie unter Verwendung einer Pigmentpaste auf Basis eines wasserverdünnbaren Polyesterharzes hergestellt worden sind, ein reaktives Melaminharz als Vernetzerharz, sowie maximal 2,5 % organische Lösemittel enthalten.

14. Verwendung von Dispersionen gemäß Ansprüchen 1 bis 7 in Kombination mit einem oder mehreren wasserdispergierbaren Melaminharzen und/oder hydrophilierten Polyisocyanaten und/oder Polyester- und/oder Polyester-Polyurethanharzen für lichtechte, physikalisch schnell trocknende Beschichtungen mit sehr guter Wasserfestigkeit und hohem Härte-Elastizitätsniveau, insbesondere für Sperrschichten in der Automobilserienlackierung.

15. Verwendung von Dispersionen gemäß Ansprüchen 1 bis 7 in Kombination mit Polyurethan-Dispersionen mit schneller phsikalischer Trocknung und hohen Hartsegmentgehalten oder/und reaktiven Vernetzerharzen zur Herstellung von reaktiven, d.h. im Temperaturbereich von 90 bis 120°C aushärtbaren Einbrennfüllern oder Einschichtlacken für die Automobillackierung oder die Kunststoffbeschichtung.

16. Verwendung von Dispersionen gemäß Ansprüchen 1 bis 7 in Lacken, Beschichtungen, Dichtstoffen und Klebmassen.
